# EUROPEAN PATENT APPLICATION

(11) **EP 3 667 134 A1**
(43) Date of publication of application: **17.06.2020**
(21) Application number: 19215771.7
(22) Date of filing: 12.12.2019
(51) Int. Cl.: F16J 15/3288, F01D 11/00, F16J 15/34

(54) **METAL TAPE CONSTRUCTION BRUSH SEAL**

(30) Priority: 12.12.2018 US 201816218141
(71) Applicant: United Technologies Corporation, Farmington, CT 06032 (US)
(72) Inventor: BLANEY, Ken F., Middleton, NH New Hampshire 03887 (US); CLARK, Thomas E., Sanford, ME Maine 04073 (US)
(74) Representative: Dehns

(57) **Abstract**

A seal assembly (10) includes an annular plate (12) extending axially between a first end (20) and a second end (22). At least two layers of metal tape (14) are stacked around the annular plate (12). Each layer of the at least two layers of metal tape (14) includes a metal sheet (27) extending axially between a first end (24) and a second end (26). The second end (26) of the metal sheet (27) is axially forward or aft of the annular plate (12), and a plurality of strips (30) is formed on the second end (26) of the metal sheet (27).

## Description

### BACKGROUND

The present invention relates to gas turbine engines, and more specifically to seals for use in turbine sections of gas turbine engines.

Gas turbine engines, such as those that power modern commercial and military aircraft, typically include a compressor to pressurize inflowing air, a combustor to burn a fuel in the presence of the pressurized air, and a turbine to extract energy from the resulting combustion gases. The turbine may include multiple rotatable blade arrays separated by multiple stationary vane arrays. A turbine blade array is typically situated radially within a blade outer air seal system or assembly (or "BOAS" system or assembly). In other words, a BOAS assembly may span an outer endwall between a plurality of static vane arrays situated upstream and downstream of the blade array. The BOAS assembly thus forms an outer (cylindrical) wall configured to confine a stream of hot post-combustion gases.

Cooling air is often provided to the BOAS assembly to enable operation while exposed to the hot combustion gases. This cooling air may be bled from one or more air compartments situated in proximity to the BOAS assembly and through one or more bleed apertures disposed within the BOAS assembly. A higher pressure is typically required to direct cooling air through the BOAS assembly. Effective seals may prevent leakage of cooling air between the BOAS assembly and adjacent component assemblies (e.g., vanes, vane arrays, and vane supports), thus allowing cooling air to flow within segments of the BOAS assembly.

As the turbine is heated by the combustor exhaust and pressurized, the cooling air may undesirably escape into the turbine through a variety of gaps between the BOAS assembly and adjacent vane arrays and other pathways formed as a result of thermal and maneuvering stresses placed upon the engine parts during operation.

Brush seals are one kind of seal that has been used to close gaps between BOAS assemblies and adjacent component assemblies. Traditionally, brush seals include wire bristles that are fixed between two plates. Manufacturing wire bristle brush seals requires many steps and is costly. First, each bristle must be cut to length, then the bristles are packed and held between the two plates. Finally, every bristle must be welded to the surrounding bristles and the two plates. If gaps are present between bristles, gas leakage can occur through the brush seal. Gas leakage across the brush seal can impair the performance and efficiency of the gas turbine engine, such as reduced flow output and decreased fuel efficiency.

### SUMMARY

In one aspect of the disclosure, a seal assembly includes a first annular plate extending axially between a first end and a second end. A second annular plate is radially inward from the first annular plate, and the second annular plate extends axially between a first end and a second end. At least two layers of metal tape are between the first annular plate and the second annular plate. A first layer and a second layer of the at least two layers of metal tape each include a metal sheet and a plurality of cuts. The metal sheet extends axially between a first end and a second end, and the second end of the metal sheet is axially forward or aft of the first annular plate and the second annular plate. The plurality of cuts are in the second end of the metal sheet and form a plurality of strips in the second end of the metal sheet.

In another aspect of the disclosure, a seal assembly includes an annular plate extending axially between a first end and a second end. At least two layers of metal tape are stacked around the annular plate. Each layer of the at least two layers of metal tape includes a metal sheet extending axially between a first end and a second end. The second end of the metal sheet is axially forward or aft of the annular plate, and a plurality of strips is formed on the second end of the metal sheet.

In another aspect of the disclosure, a seal assembly includes a plate, a first sheet metal layer connected to the plate, and a second sheet metal layer connected to the plate. A first plurality of cuts in the first sheet metal layer forms a first plurality of flat bristles in the first sheet metal layer. A second plurality of cuts in the second sheet metal layer forms a second plurality of flat bristles in the second sheet metal layer.

Persons of ordinary skill in the art will recognize that other aspects and embodiments of the present invention are possible in view of the entirety of the present disclosure, including the accompanying figures.

### BRIEF DESCRIPTION OF THE DRAWINGS

FIG. 1 is a cross-sectional view of a seal assembly on a mandrel.
FIG. 2 is a perspective view of the seal assembly and the mandrel from FIG. 1 along with an attachment shoe.
FIG. 3 is an enlarged elevation view of the seal assembly, the mandrel, and the shoe from Circle A in FIG. 2.
FIG. 4 is a perspective view of another embodiment of the seal assembly and the mandrel.
FIG. 5 is a cross-sectional view of another embodiment of the seal assembly and the mandrel.

While the above-identified drawing figures set forth one or more embodiments of the invention, other embodiments are also contemplated. In all cases, this disclosure presents the invention by way of representation and not limitation. It should be understood that numerous other modifications and embodiments can be devised by those skilled in the art, which fall within the scope of the principles of the invention. The figures may not be drawn to scale, and applications and embodiments of the present invention may include features and components not specifically shown in the drawings. Like reference numerals identify similar structural elements.

### DETAILED DESCRIPTION

This disclosure relates to a seal assembly that includes multiple layers of sheet metal tape connected to a plate. Strips are cut into each of the layers of the sheet metal tape to form flat bristles. The strips in each layer are circumferentially offset from the strips in the adjacent layers so that the strips overlap and cover the seams between the strips in the adjacent layers, thereby minimizing leakage paths through the strips of the seal assembly. This seal assembly is relatively easy to assemble in comparison to traditional wire bristle seals because the strips within each layer are connected together prior to being assembled with the other layers. This seal assembly also allows easier control of the position of the strips during assembly over traditional wire bristles because the strips within a single layer are connected into a circumferential row that can shifted circumferentially to offset the strips in the row with the strips in adjoining rows. The ability to control the position of each row of strips provides the ability to make sure seams between strips do not line up with seams in neighboring rows, thereby reducing gas leakage through the layers of sheet metal tape of the seal assembly. The seal assembly is discussed below with reference to the figures.

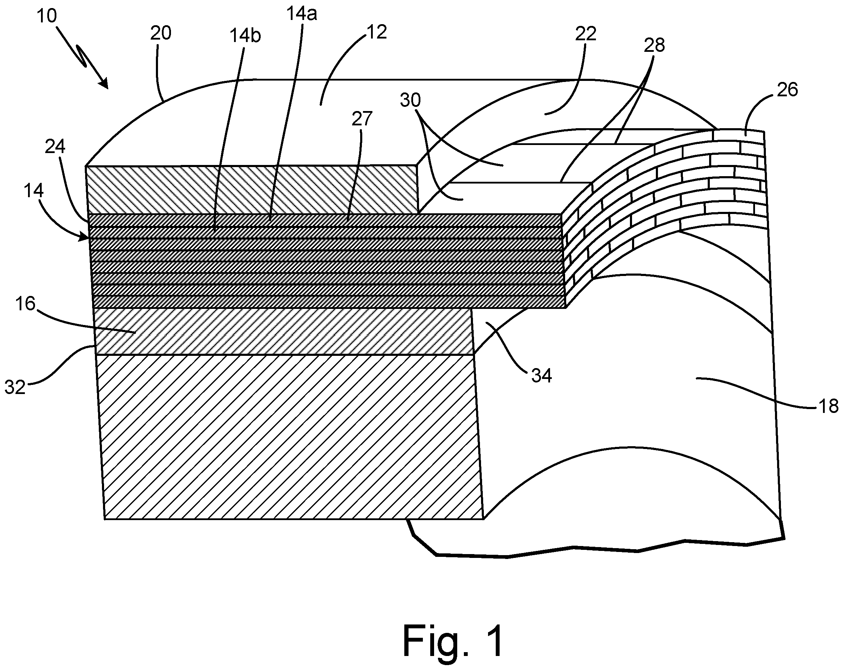

FIG. 1 is a perspective cross-sectional view of seal assembly 10. Seal assembly 10 includes first plate 12, metal tape layers 14, and second plate 16. Mandrel 18 is also shown in FIG. 1 and is used to assemble seal assembly 10. As shown in FIG. 1, first plate 12 includes first end 20 and second end 22. Each layer of metal tape layers 14 includes first end 24, second end 26, metal sheet 27, cuts 28, and strips 30. Second plate includes first end 32 and second end 34.

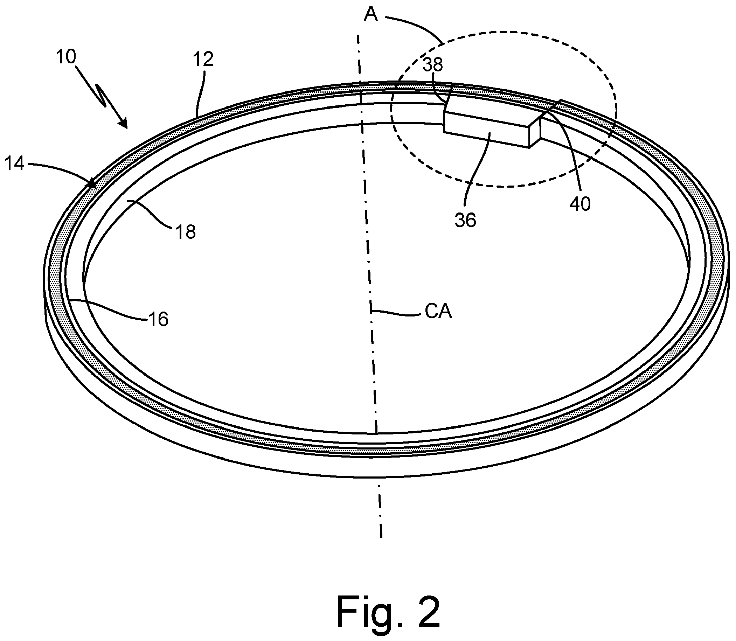

In the embodiment of FIG. 1, first plate 12 and second plate 16 are both annular and extend circumferentially about center axis CA (shown in FIG. 2). First plate 12 extends axially between first end 20 and second end 22, with first end 20 being axially forward of second end 22. Second plate 16 extends axially between first end 32 and second end 34, with first end 32 being axially forward of second end 34. Second plate 16 is positioned radially inward from first plate 12 and is concentric with first plate 12. Both first plate 12 and second plate 16 can be made from a metal or metal alloy capable of withstanding the operating temperatures and stresses present in a turbine section of a gas turbine engine. For example, first plate 12 and second plate 16 can be made of a nickel alloy.

Metal tape layers 14 are positioned between first plate 12 and second plate 16. In the embodiment of FIG. 1, metal tape layers 14 are positioned radially between first plate 12 and second plate 16 and each of metal tape layers 14 is annular and extends circumferentially about center axis CA (shown in FIG. 2). Metal tape layers 14 are radially stacked together and each metal tape layer 14 is formed from metal sheet 27. Metal sheet 27 in each layer 14 is radially thinner than first plate 12 and radially thinner than second plate 16. The thickness of metal sheet 27 in each layer 14 can be modified and optimized to best meet the operating conditions that seal assembly 10 will experience. Metal sheet 27 in each layer 14 can derive from a single sheet that was spiral wound several times around second plate 16. Alternatively, metal sheet 27 in each layer can be individually wound around second plate 16. Metal sheet 27 of each metal tape layer 14 extends axially between first end 24 and second end 26. In the embodiment of FIG. 1, first end 24 of each metal tape layer 14 is connected to first end 20 of first plate 12 and first end 32 of second plate 16 by welding or brazing. In alternative embodiments, first end 24 of each metal tape layer 14 can be connected to first plate 12 and second plate 16 by fasteners, such as rivets, bolts, screws, or pins.

Metal sheet 27 of each metal tape layer 14 is axially longer than first plate 12 and second plate 16 such that second end 26 of each metal tape layer 14 extends axially aft of first plate 12 and second plate 16. Cuts 28 are made in each metal tape layer 14 at second end 26 and extend axially toward first end 24. Cuts 28 are also spaced circumferentially from each other to form strips 30 on second end 26 of each metal tape layer 14. Cuts 28 form seams between adjacent strips 30 within the same metal tape layer 14. Each of cuts 28 start at second end 26 of their respective metal tape layer 14, and each of cuts 28 terminates axially on their respective metal tape layer 14 between first end 20 and second end 22 of first plate 12. In the embodiment of FIG. 1, strips 30 are flat bristles that extend axially aft of first plate 12 and second plate 16. Strips 30 in each metal tape layer 14 are circumferentially offset from strips 30 in the adjacent layers 14 such that strips 30 in a first metal tape layer 14a overlap the seams or cuts 28 in a second adjacent layer 14b, as shown in FIG. 1. By circumferentially staggering and offsetting strips 30 between layers 14, strips 30 cover and block cuts 28 in adjacent layers 14, which reduces or eliminates gas leakage through strips 30. While cuts 28 and strips 30 are shown in FIG. 1 as extending axially straight, the direction and size of cuts 28 and strips 30 can be modified for optimal performance of seal assembly 10. For example, cuts 28 and strips 30 can curve circumferentially as cuts 28 and strips 30 extend in the axial direction.

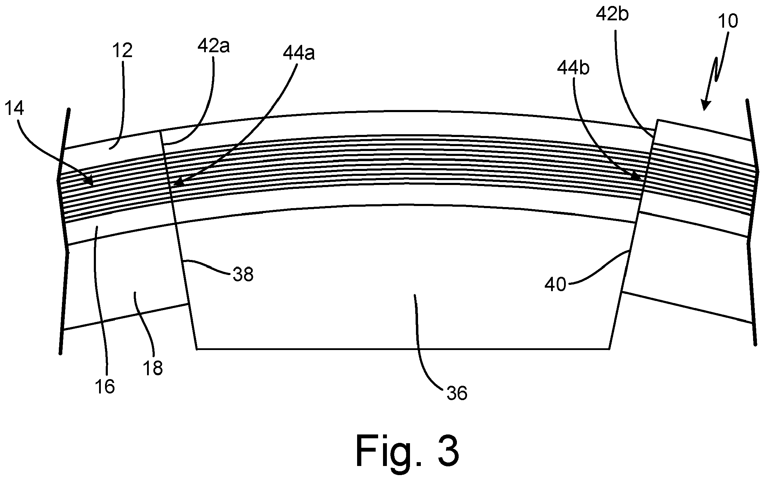

Strips 30 of seal assembly 10 can be used in a gas turbine engine (not shown) to close and seal a gap between two neighboring components, such as a gap between blade outer air seal (commonly referred to as BOAS) and an adjacent vane pack in a turbine section. During the assembling process of seal assembly 10, mandrel 18 is positioned against second plate 16 opposite metal tape layers 14. One method for assembling seal assembly 10 is discussed below with reference to FIGS. 2 and 3.

FIGS. 2 and 3 will be discussed concurrently. FIG. 2 is a perspective view of seal assembly 10 and mandrel 18 along with attachment shoe 36. FIG. 3 is an enlarged elevation view of seal assembly 10, mandrel 18, and attachment shoe 36 from Circle A in FIG. 2. As shown in FIGS. 2 and 3, mandrel 18 is a split ring that includes first circumferential end 38 and second circumferential end 40. First cut 42a, second cut 42b, first joining end 44a, and second joining end 44b are also shown in FIG. 3. In the embodiment of FIGS. 2 and 3, seal assembly 10 is a split-ring seal assembly.

Mandrel 18 is annular and extends circumferentially around center axis CA from first circumferential end 38 to second circumferential end 40. Mandrel 18 can be formed from steel or any other material with enough elasticity to allow first circumferential end 38 and second circumferential end 40 to spread apart to receive attachment shoe 36. Attachment shoe 36 is a tapered wedge that fits between first circumferential end 38 and second circumferential end 40 of mandrel 18. During the assembly of seal assembly 10, attachment shoe 36 is first inserted between first circumferential end 38 and second circumferential end 40. Attachment shoe 36 is sized so as to displace second circumferential end 40 radially outward from first circumferential end 38 approximately the same distance as the thickness of a single metal tape layer 14. Second plate 16 is then connected to attachment shoe 36 and wrapped circumferentially around mandrel 18. Second plate 16 can be connected to attachment shoe 36 via welding, fasteners, or adhesive.

Metal tape layers 14 can be provided to seal assembly 10 from a length of metal tape 14 wound into a spool on a roll (not shown). Strips 30 (shown in FIG. 1) can be formed in the length of metal tape 14 before the length of metal tape 14 is assembled into seal assembly 10. A high speed stamping technique or roll-to-roll technique can be used to cut strips 30 into the length of metal tape 14 quickly and efficiently. In some embodiments a chemical etching process can be used to form strips 30 where the thickness of metal tape 14 is sufficiently thin for chemical etching. In other embodiments, slower and more costly methods, such as laser cutting, can be used to cut and form strips 30 in metal tape 14. After strips 30 are formed in the length of metal tape 14 and before the length of metal tape 14 is assembled into seal assembly 10, strips 30 and the rest of metal tape 14 can undergo a micro-polishing process (not shown) to reduce any stress risers that may have resulted from the cutting or etching process.

After strips 30 are formed and polished, the length of metal tape 14 is wound into a spool on a roller. The length of metal tape 14 is then connected by one end to second plate 16 and attachment shoe 36 and then spiral wound around second plate 16 and mandrel 18 several times to form multiple metal tape layers 14 around second plate 16. First plate 12 is connected to attachment shoe 36 over metal tape layers 14 and wrapped around metal tape layers 14, first plate 16, and mandrel 18.

Next, first plate 12, metal tape layers 14, and second plate 16 are welded or otherwise joined together. First cut 42a is made through first plate 12, metal tape layers 14, and second plate 16 at the interface between attachment shoe 36 and first circumferential end 38 of mandrel 18. First cut 42a forms first joining end 44a of seal assembly 10. Second cut 42b is made through metal tape layers 14 at the interface between attachment shoe 36 and second circumferential end 40 of mandrel 18. Second cut 42b forms second joining end 44b. Attachment shoe 36 and the portions of first plate 12, metal tape layers 14, and second plate 16 connected to attachment shoe 36 are removed. With the removal of attachment shoe 36, first circumferential end 38 and second circumferential end 40 of mandrel 18 spring back together.

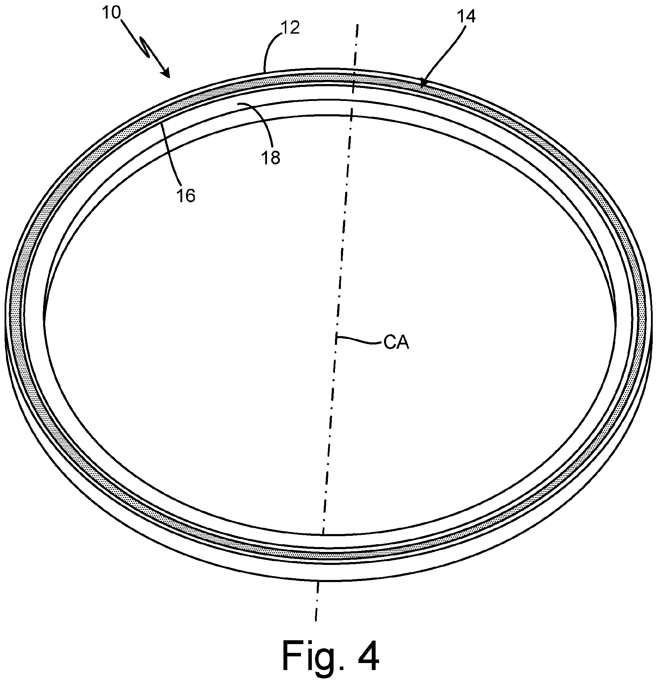

First joining end 44a and second joining end 44b can both be machined such that first joining end 44a and second joining end 44b can form a lap joint (not shown). First joining end 44a and second joining end 44b can be machined into a lap joint while seal assembly 10 is still on mandrel 18. First circumferential end 38 and second circumferential end 40 of mandrel 18 can be sacrificed in the process of forming first joining end 44a and second joining end 44b into a lap joint. After the split ring embodiment of seal assembly 10 is completely assembled and removed from mandrel 18, seal assembly 10 can be installed within a gas turbine engine (not shown). FIG. 4 shows an alternative embodiment of mandrel 18 and an alternative method for assembling seal assembly 10 into a full hoop instead of a split ring like the embodiment of FIGS. 2 and 3.

FIG. 4 is a perspective view of seal assembly 10 and mandrel 18. In the embodiment of FIG. 4, mandrel 18 is an annular ring that extends continuously about center axis CA. Second plate 16 is wrapped around mandrel 18 and formed into a continuous annular shape. Second plate 16 can be pre-formed into the continuous annular shape before being placed onto mandrel 18, or second plate 16 can be formed into the continuous annular shape on mandrel 18.

A single metal tape layer 14 is then individually wrapped around second plate 16 and formed into a continuous annular shape. One-by-one, additional metal tape layers 14 are wrapped around the second plate 16 and mandrel 18 until all metal tape layers 14 have been assembled around second plate 16 and mandrel 18. Strips 30 (shown in FIG. 1) can be formed on each metal tape layer 14 before each metal tape layer 14 is assembled around second plate 16 and mandrel 18. Each of metal tape layers 14 can be formed into the continuous annular shape before being placed around second plate 16 and mandrel 18, or each of metal tape layers 14 can be formed into the continuous annular shape while being assembled around second plate 16 and mandrel 18.

First plate 12 is then wrapped into a continuous annular shape around metal tape layers 14, second plate 16, and mandrel 18. First plate 12 can be annular before being assembled around metal tape layers 14, or first plate 12 can be formed into the annular shape as first plate 12 is being assembled around metal tape layers 14. First plate 12, metal tape layers 14, and second plate 16 can be welded or otherwise joined together before seal assembly 10 is removed from mandrel 18. The embodiment of seal assembly 10 of FIG. 4 once completed forms a full continuous hoop.

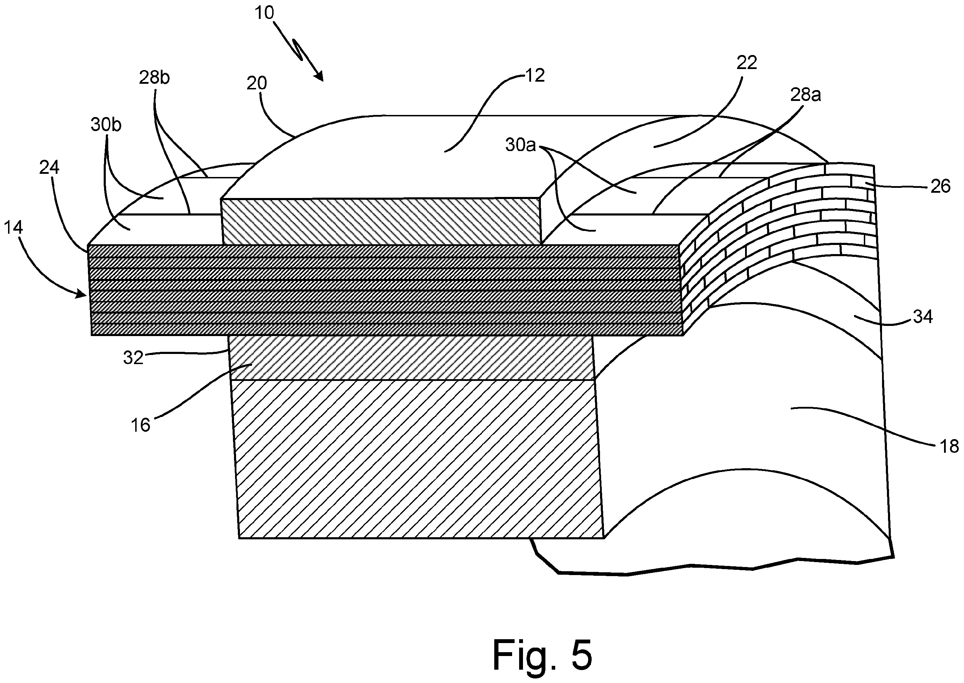

FIG. 5 is a cross-sectional view of another embodiment of seal assembly 10 on mandrel 18. As shown in FIG. 5, first plate 12 extends axially between first end 20 and second end 22, with first end 20 being axially forward of second end 22. Second plate 16 extends axially between first end 32 and second end 34, with first end 32 being axially forward of second end 34. Second plate 16 is positioned radially inward from first plate 12 and is concentric with first plate 12. Metal tape layers 14 are positioned between first plate 12 and second plate 16.

In the embodiment of FIG. 5, first end 24 of each metal tape layer 14 can extend axially forward of first plate 12 and second plate 16, while second end 26 of each metal tape layer 14 can extend axially aft of first plate 12 and second plate 16. A first set of cuts 28a are made in each metal tape layer 14 starting at second end 26 of each metal tape layer 14 and terminating axially forward of second end 22 of first plate 12. The first set of cuts 28a form a first set of strips 30a in each metal tape layer 14. The first set of strips 30a extend axially aft of first plate 12 and second plate 16. A second set of cuts 28b are made in each metal tape layer 14 starting at first end 24 of each metal tape layer 14 and terminating axially aft of first end 20 of first plate 12. The second set of cuts 28b form a second set of strips 30b in each metal tape layer 14. The second set of strips 30b extend axially forward of first plate 12 and second plate 16.

Similar to the embodiment of FIG. 1, the second set of strips 30b in each metal tape layer 14 can overlap the second set of cuts 28b in adjacent metal tape layers 14 so as to block and inhibit gas leakage through the second set of strips 30b. The embodiment of seal assembly 10 shown in FIG. 5 is useful in that the first set of strips 30a can close and seal a first gap (not shown) and the second set of strips 30a can close and seal a second gap (not shown) forward of the first gap.

In view of the foregoing description, it will be recognized that the present disclosure provides numerous advantages and benefits. For example, the present disclosure provides seal assembly 10 with multiple metal tape layers 14 connected between first plate 12 and second plate 16. Strips 28 are cut into each metal tape layer 14 to form flat bristles. Strips 28 in each metal tape layer 14 are circumferentially offset from the strips 28 in adjacent metal tape layers 14 so that strips 28 overlap and cover the seams between strips 28 in the adjacent metal tape layers 14, thereby eliminating leakage paths through strips 28. Seal assembly 10 is relatively easy to assemble in comparison to traditional wire bristle seals because strips 28 within each metal tape layer 14 are connected together prior to being assembled with the other metal tape layers 14. Instead of welding hundreds or even thousands of individual wire bristles together into a brush seal assembly, a manufacturer need only weld several layers of metal tape together to form seal assembly 10. Seal assembly 10 also allows easier control of the position of strips 28 during assembly over traditional wire bristles because strips 28 within each metal tape layer 14 can be cut into a specific pattern so that strips 28 are circumferentially offset with strips 28 in adjacent layers. The ability to control the position of strips 28 provides the ability to make sure seams between strips 28 do not line up with seams in neighboring layers, thereby reducing gas leakage through sheet metal layers 14 of seal assembly 10.

The following are non-exclusive descriptions of possible embodiments of the present invention.

In one embodiment, a seal assembly includes a first annular plate extending axially between a first end and a second end. A second annular plate is radially inward from the first annular plate, and the second annular plate extends axially between a first end and a second end. At least two layers of metal tape are between the first annular plate and the second annular plate. A first layer and a second layer of the at least two layers of metal tape each include a metal sheet and a plurality of cuts. The metal sheet extends axially between a first end and a second end, and the second end of the metal sheet is axially forward or aft of the first annular plate and the second annular plate. The plurality of cuts are in the second end of the metal sheet and form a plurality of strips in the second end of the metal sheet.

The seal assembly of the preceding paragraph can optionally include, additionally and/or alternatively, any one or more of the following features, configurations and/or additional components:
the plurality of strips in the first layer overlap the plurality of cuts in the second layer;
the second end of the metal sheet extends axially aft of the first annular plate and the second annular plate, and wherein the first end of the metal sheet is connected to the first end of the first annular plate and the first end of the second annular plate;
the second end of the metal sheet extends axially aft of the first annular plate and the second annular plate, wherein the first end of the metal sheet extends axially forward of the first annular plate and the second annular plate, and wherein a second plurality of strips are formed in the first end of the metal sheet by a second plurality of cuts;
the second plurality of strips in the first layer overlap the second plurality of cuts in the second layer;
a method of manufacturing the seal assembly includes: making the plurality of cuts in the metal tape to form the plurality of strips; wrapping the metal tape around the second annular plate; placing the second annular plate around the metal tape and the second annular plate; and welding the first annular plate, the metal tape, and the second annular plate together; and/or
wrapping the metal tape around the second annular plate comprises spiral winding the metal tape around the second annular plate.

In another embodiment, a seal assembly includes an annular plate extending axially between a first end and a second end. At least two layers of metal tape are stacked around the annular plate. Each layer of the at least two layers of metal tape includes a metal sheet extending axially between a first end and a second end. The second end of the metal sheet is axially forward or aft of the annular plate, and a plurality of strips is formed on the second end of the metal sheet.

The seal assembly of the preceding paragraph can optionally include, additionally and/or alternatively, any one or more of the following features, configurations and/or additional components:
the at least two layers of metal tape comprise: a first layer of metal tape extending circumferentially around a center axis of the seal assembly; and a second layer of metal tape radially inward from the first layer and extending circumferentially around a center axis of the seal assembly;
the plurality of strips in the first layer are circumferentially offset with the plurality of strips in the second layer such that the plurality of strips in the first layer over lap seams between the plurality of strips in the second layer;
the plurality of strips in the first layer and the plurality of strips in the second layer extend axially aft of the annular plate;
the first end of the metal sheet in the first layer and the first end of the metal sheet in the second layer are both connected to the annular plate; and/or
the first end of the metal sheet in the first layer and the first end of the metal sheet in the second layer both extend axially forward of the annular plate, and a second plurality of strips are formed on the first end of the metal sheet in the first layer and the first end of the metal sheet in the second layer.

In another embodiment, a seal assembly includes a plate, a first sheet metal layer connected to the plate, and a second sheet metal layer connected to the plate. A first plurality of cuts in the first sheet metal layer forms a first plurality of flat bristles in the first sheet metal layer. A second plurality of cuts in the second sheet metal layer forms a second plurality of flat bristles in the second sheet metal layer.

The seal assembly of the preceding paragraph can optionally include, additionally and/or alternatively, any one or more of the following features, configurations and/or additional components:
the plate is annular and extends circumferentially around a center axis of the seal assembly;
the first sheet metal layer and the second sheet metal layer are both annular and extend circumferentially around the center axis of the seal assembly;
the first plurality of flat bristles and the second plurality of flat bristles both extend axially aft of the plate;
the first plurality of flat bristles and the second plurality of flat bristles both extend axially forward of the plate;
the flat bristles in the first plurality of flat bristles overlap the second plurality of cuts; and/or
a second plate, wherein the first sheet metal layer and the second sheet metal layer are connected between the plate and the second plate.

Any relative terms or terms of degree used herein, such as "substantially", "essentially", "generally", "approximately", and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transitory vibrations and sway movements, temporary alignment or shape variations induced by operational conditions, and the like.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. For example, while FIGS. 1-5 show embodiments where metal tape layers 14 are positioned radially between first plate 12 and second plate 16 and strips 30 extend axially, in other embodiments, metal tape layers 14 can be positioned axially between first plate 12 and second plate 16 and strips 30 can extend radially inward or radially outward from first plate 12 and second plate 16. Therefore, it is intended that the invention not be limited to the particular embodiment(s) disclosed, but that the invention will include all embodiments falling within the scope of the appended claims.

## Claims

1. A seal assembly (10) comprising:
a first annular plate (12) extending axially between a first end (20) and a second end (22);
a second annular plate (16) radially inward from the first annular plate (12), wherein the second annular plate (16) extends axially between a first end (32) and a second end (34); and
at least two layers of metal tape (14) between the first annular plate (12) and the second annular plate (16), wherein a first layer (14a) and a second layer (14b) of the at least two layers of metal tape (14) each comprises:
a metal sheet (27) extending axially between a first end (24) and a second end (26), wherein the second end (26) of the metal sheet (27) is axially forward or aft of the first annular plate (12) and the second annular plate (16); and
a first plurality of cuts (28;28a) in the second end (26) of the metal sheet (27) that form a first plurality of strips (30;30a) in the second end (26) of the metal sheet (27).

2. The seal assembly of claim 1, wherein the first plurality of strips (30;30a) in the first layer (14a) overlap the first plurality of cuts (28;28a) in the second layer (14b).

3. The seal assembly of claim 1 or 2, wherein the second end (26) of the metal sheet (27) extends axially aft of the first annular plate (12) and the second annular plate (16), and wherein the first end (24) of the metal sheet (27) is connected to the first end (20) of the first annular plate (12) and the first end (32) of the second annular plate (16).

4. The seal assembly of claim 1 or 2, wherein the second end (26) of the metal sheet (27) extends axially aft of the first annular plate (12) and the second annular plate (16), the first end (24) of the metal sheet (27) extends axially forward of the first annular plate (12) and the second annular plate (16), and a second plurality of strips (30b) are formed in the first end (24) of the metal sheet (27) by a second plurality of cuts (28b).

5. The seal assembly of claim 4, wherein the second plurality of strips (30b) in the first layer (14a) overlap the second plurality of cuts (28b) in the second layer (14b).

6. A method of manufacturing the seal assembly (10) of any preceding claim, wherein the method comprises:
making the plurality of cuts (28;28a,28b) in the metal tape (14) to form the plurality of strips (30;30a,30b);
wrapping the metal tape (14) around the second annular plate (16);
placing the first annular plate (12) around the metal tape (14) and the second annular plate (16); and
welding the first annular plate (12), the metal tape (14), and the second annular plate (16) together.

7. The method of claim 6, wherein wrapping the metal tape (14) around the second annular plate (16) comprises spiral winding the metal tape (14) around the second annular plate (16).

8. A seal assembly (10) comprising:
a plate (12);
a first sheet metal layer (14a) connected to the plate (12);
a second sheet metal layer (14b) connected to the plate (12); and
a first plurality of cuts (28;28a) in the first sheet metal layer (14a) that forms a first plurality of flat bristles (30;30a) in the first sheet metal layer (14a); and
a second plurality of cuts (28;28a) in the second sheet metal layer (14b) that forms a second plurality of flat bristles (30;30a) in the second sheet metal layer (14b).

9. The seal assembly of claim 8, wherein the plate (12) is annular and extends circumferentially around a center axis (CA) of the seal assembly (10).

10. The seal assembly of claim 8 or 9, wherein the first sheet metal layer (14a) and the second sheet metal layer (14b) are both annular and extend circumferentially around a/the center axis (CA) of the seal assembly (10).

11. The seal assembly of any of claims 8 to 10, wherein the first plurality of flat bristles (30;30a) and the second plurality of flat bristles (30;30a) both extend axially aft of the plate (12).

12. The seal assembly of any of claims 8 to 11, wherein the first plurality of flat bristles (30;30a) and the second plurality of flat bristles (30;30a) both extend axially forward of the plate (12).

13. The seal assembly of any of claims 8 to 12, wherein the flat bristles (30;30a) in the first plurality of flat bristles (30;30a) overlap the second plurality of cuts (28;28a).

14. The seal assembly of any of claims 8 to 13 further comprising:
a second plate (16), wherein the first sheet metal layer (14a) and the second sheet metal layer (14b) are connected between the plate (12) and the second plate (16).
